# NEW EUROPEAN PATENT SPECIFICATION

(11) **EP 1 610 978 B3**
(45) Date of publication of this specification: **08.06.2016**
(45) Mention of the grant of the patent: 06.07.2011
(21) Application number: 04758297.8
(22) Date of filing: 25.03.2004
(51) Int. Cl.: B60R 1/00

(54) **VEHICLE MIRROR ASSEMBLY**
FAHRZEUGSSPIEGELANORDNUNG
SYSTEME DE MIROIR POUR VEHICULE

(30) Priority: 26.03.2003 US 457650 P
(43) Date of publication of application: 04.01.2006
(73) Proprietor: SKJP Holdings, LLC, Naples FL 34108 (US); Diono, LLC, Sumner, Washington 98390 (US)
(72) Inventor: BERGER, Constance F., Naples, FL 34108 (US); BERGER, Russell, Needham, MA 02494 (US)
(74) Representative: Foot, Paul Matthew James
(86) International application number: PCT/US2004/009082
(87) International publication number: WO 2004/087460

(56) References cited:
- WO-A-02/094613
- WO-A-03/018362
- FR-A- 2 725 670
- US-A- 4 702 572
- US-A- 5 103 347
- US-A- 6 120 155
- US-A1- 2003 002 180
- US-B1- 6 354 708

## Description

### BACKGROUND OF THE INVENTION

The present invention generally relates to a mirror assembly for use in motor vehicles. The mirror allows a driver of the vehicle to view a child sitting in a safety seat. The safety seat is positioned in the vehicle's rear seat so that the child faces rearward.

In recent years, federal and state laws have been enacted that require a child, who travels in a motor vehicle, to be placed in a child safety seat which must be fastened to the rear seat of the vehicle by seat belts. For older children, the safety seat is positioned so that the child faces the front of the vehicle. For infants and younger children, the safety seat is positioned so that the child faces the rear of the vehicle. In other words, the child is seated in the safety seat so that he or she looks out towards the back of the vehicle.

When a child is positioned in a rear-facing safety seat, it is very difficult for a driver or passenger in the front seat to observe the child. The child cannot be seen by a person looking at the rear view mirror attached to the front windshield. Rather, the driver or front seat passenger must twist his or her body and lean over back-wards to view the child. This seating configuration presents several safety hazards. First, it is difficult for the driver or front seat passenger to know if the child is choking, injured, or in some other distress. Furthermore, if the driver must lean over to view the child in the back seat, he or she may lose control of the vehicle. The automotive safety seat industry has attempted to address these problems in a number of ways.

For instance, some mirror assemblies have been developed that are placed near the top of the back rest portion of the rear seat. This mirror allows a person in the front seat to observe a child who is located in the rear seat and facing towards the back of the vehicle. Harris, U.S. Patent 4,902,118 discloses such a mirror assembly. The mirror assembly includes a wedge-shaped foam piece having a pocket for receiving a mirror plate. The mirror assembly is positioned so that its tapered surface rests against the back rest portion of a rear seat. Straps having buckles are sewn onto the back of the mirror assembly. The straps are sufficiently long enough to encircle the rear seat. The ends of the straps are fastened together on the backside of the rear seat to secure the mirror assembly in place. However, this assembly cannot be easily adjusted.

Monahan et al., U.S. Patent 6,354,708 discloses an infant-viewing mirror system that can be mounted to a back rest portion of a rear seat in a car. The mirror system allows a driver to view an infant in a rear-facing car seat. The mirror system includes two male straps, two female straps, a mirror support, a mirror housing, and a mirror. The mirror housing is pivotally attached to the mirror support by a ball joint which allows the mirror to be adjusted. The fastening straps include male and female connectors. The mirror system can be attached to a rear seat in a sedan-type or sport utility-type vehicle by inserting the straps around the backside of the seat. Due to the construction of Monahan et al., the mirror is positioned too low making it difficult to point to the child.

Also WO 02/094613 A Discloses such a mirror assembly.

The above-described conventional mirror assemblies often are cumbersome and difficult to install. The fastening systems for such mirrors are not universal; rather, one technique must be used to fasten the mirror in a sedan-type car, and a different technique must be used in a sport utility-type vehicle.

More particularly, for minivans, station wagons, and other sport utility-type vehicles, one fastening strap must be wrapped over the top of the seat and down the backside, while the otherfastening strap must be inserted through the gap located between the back rest and bottom portion of the seat. Then, the fastening straps are mated together on the backside of the seat by interlocking male and female connectors. This alignment of the fastening straps and interlocking of the connectors can be a time-consuming process. For sedan-type vehicles, the positioning and fastening of the mirror assembly is difficult, because the mirror must be secured by connecting the straps together on the backside of the seat. The rear ledge/shelf of the sedan can interfere with the locking of the straps and connectors.

In view of the foregoing disadvantages with such conventional mirror assemblies, there is a need for a mirror that can be installed easily in any type of motor vehicle (for example, sedans, minivans, station wagons, trucks, and sport-utility vehicles). The present invention provides a mirror assembly that can be universally installed.

Some conventional mirrors are attached to sections in the vehicle other than the back rest portion of the rear seat. For example, Chupp et al., U.S. Patent 6,283,622 discloses a mirror assembly that is fastened to the headrest portion of an automotive vehicle seat. The assembly includes a mirror that is placed with an easy open/close cover. The assembly also contains a harness having two short and two long straps. The two short straps slip under the headrest while the longer straps wrap around the top of the headrest. The mirror assembly can also include a battery-powered illumination system. When the mirror is fastened to the backside of a front seat headrest, the mirror faces back towards the rear seat, and the back seat passengers have a lighted vanity mirror. Chupp cannot be adjusted.

Gardner, U.S. Patent 4,909,618 discloses a mirror structure that is mounted on the rear ledge/shetf of the car which is behind the rear seat. The third tail light, which is located on the rear windshield, may be used to illuminate the mirror. A car safety seat is secured to the rear seat so that the baby faces the rear of the car and the mounted mirror. The mirror is attached to a universal ball joint so that it can be adjusted to different angles. The mirror can be turned so that the face of the baby can be viewed by a person, who is seated in the front seat and looking at the rear view mirror. However, the mirror is mounted far from the target requiring precise adjustment of the mirror.

Lumbra et al., U.S. Patent 5,103,347 discloses a mirror that can be secured to a pivotable arm rest of a rearseat in an automobile, while the arm rest is in a stored position. A car seat is placed in the rear seat in a rear-facing position so that the child, who sits in the car seat, faces the mounted mirror. The mirror is mounted in a frame, and the frame is provided with multiple straps. The straps can contain areas coated with a pressure-sensitive adhesive or hook and loop fasteners for releasably attaching the opposing straps together. The straps can be wrapped around the pivotable arm rest, while the arm rest is in a stored position. This secures the mirror frame to the arm rest. This mirror has little range of adjustment.

The foregoing mirror assemblies often are difficult to adjust to provide a clear line of vision between the driver or passenger in the front seat and the child. A mirror mounted in a frame, which is attached to the ledge/shelf or the arm rest portion of the back seat, is difficult to adjust. It is not easy to rotate such mirrors so that they are at different vision angles, unless the straps are detached and the entire assembly is repositioned.

In view of the foregoing disadvantages with such traditional mirror assemblies, there is a need for a mirror that can be located close to the target and be adjusted easily to multiple positions. The present invention provides a mirror assembly that can be universally adjusted. These and other objects, features, and advantages of this invention are evident from the following description and attached figures.

### SUMMARY OF THE INVENTION

The present invention provides a mirror assembly as defined in independent claim 1, and optionally any of the dependent claims appended to claim 1. The mirror assembly is attached to a head rest region of a rear seat in a motor vehicle. For example, the mirror assembly can be attached directly to the head rest or, more preferably, to both the head rest and the back rest to bridge the game therebetween. The mirror assembly comprises a mirror for viewing a child sitting in a rear-facing child safety seat. The safety seat rests on the rear seat of the motor vehicle. The mirror allows a driver or passenger in the front seat of the vehicle to observe the child sitting in the safety seat.

The mirror assembly further includes an adjustable mirror housing for holding and framing the mirror and a base plate for supporting the mirror housing. The base plate is attached to the mirror housing by a ball joint allowing the housing to be adjusted in various directions. The mirror assembly can also include at least one fastening strap extending from the base plate. The fastening strap has a first end and an opposing second end for looping the strap around the head rest region of the rear seat such as between the head rest and the back rest, and a connector means for coupling the first and second ends of the strap together.

The mirror housing, mirror, and base plate can have a variety of structures. For instance, each of the mirror housing, mirror, and base plate pieces can be circular-shaped. In another embodiment, the mirror housing, mirror, and base plate each are square-shaped. Also, the mirror housing and mirror can be octagonal-shaped, and the base plate can be square-shaped. In another instance, the mirror housing and mirror are rectangular-shaped, and the base plate is square-shaped. In still another embodiment, the mirror housing and mirror are rectangular-shaped, and the base plate is square-shaped.

The base plate can include a foam pad adhered to its surface. When the base plate is placed against the head rest and back rest, the foam pad acts as a cushion gainst the head rest and backrest and serves as a bridge over the gap therebetween. Also, the base plate can include multiple slots for inserting the fastening strap therethrough. The fastening strap can be equipped with various connector means. For instance, the connector means can be a slotted buckle or a hook and loop fastening system. Preferably, the connector means comprises a male and female connector.

### BRIEF DESCRIPTION OF THE DRAWINGS

The novel features that are characteristic of the present invention are set forth in the appended claims. However, the preferred embodiments of the invention, together with further objects and attendant advantages, are best understood by reference to the following detailed description taken in connection with the accompanying drawings in which:
FIG. 1 is a schematic side view of a motor vehicle equipped with the mirror assembly of this invention;
FIG. 2 is a side perspective view of one embodiment of the mirror assembly of the present invention;
FIG. 3 is a front view of the mirror assembly shown in FIG. 2;
FIG. 4 is a back view of the mirror assembly shown in FIG. 2;
FIG. 5 is a top view of one embodiment of the base plate in the mirror assembly of this invention showing slotted portions for the fastening strap;
FIG. 6 is a back view of one embodiment of the mirror assembly of the present invention showing a foam pad attached to the base plate;
FIG. 7 is a front view of one embodiment of the mirror assembly of this invention showing a square base plate and square mirror;
FIG. 8 is a front view of one embodiment of the mirror assembly of this invention showing a circular base plate and circular mirror;
FIG. 9 is a front view of one embodiment of the mirror assembly of this invention showing a square base plate and rectangular mirror;
FIG. 10 is a front view of one embodiment of the mirror assembly of this invention showing a square base plate and octagonal mirror;
FIG. 11 is a side perspective view of one embodiment of the mirror assembly of this invention showing the mirror housing mounted symmetrically on the base plate;
FIG. 12 is a side perspective view of another embodiment of the mirror assembly of this invention showing the mirror housing mounted asymmetrically in an offset position on the base plate;
FIG. 13 is a top view of the base plate in FIG. 5 showing the fastening strap inserted through the slotted portions of the plate;
FIG. 14 shows the mirror assembly of this invention fastened to a head rest portion of a rear seat in a motor vehicle;
FIG. 15 is a top view of the base plate in FIG. 5 showing a fastening strap containing a buckle on a first end and a second loose end which is inserted through the slotted portions of the plate; and
FIG. 15A shows the fastening strap in FIG. 15 with the loose end of the strap inserted through the buckle and tightened.

### DETAILED DESCRIPTION OF THE PREFERRED EMBODIMENTS

The present invention provides a mirror assembly for a motor vehicle. The assembly is attached to a head rest portion of a rear seat in the vehicle. The assembly is used for viewing a child sitting in a rear-facing child safety seat. The safety seat rests on the rear seat of the vehicle. The mirror allows a driver or passenger in the front seat of the vehicle to observe the child.

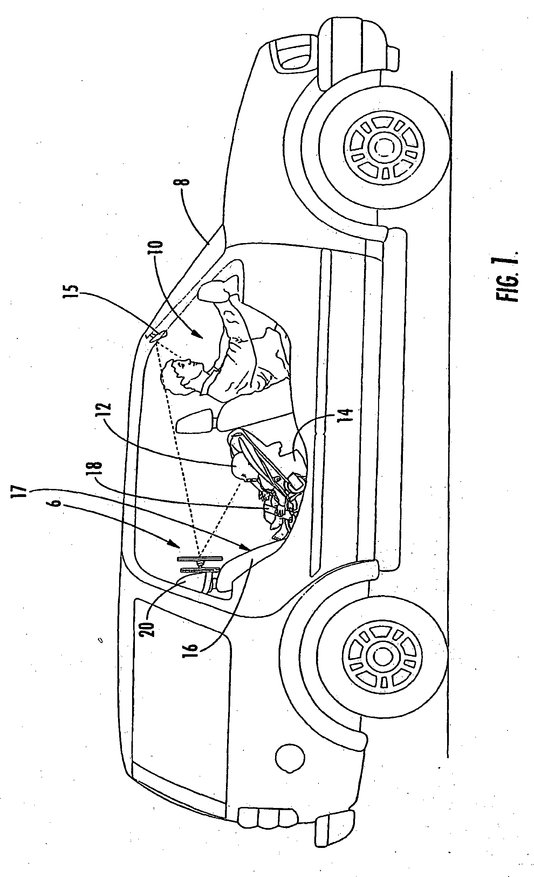

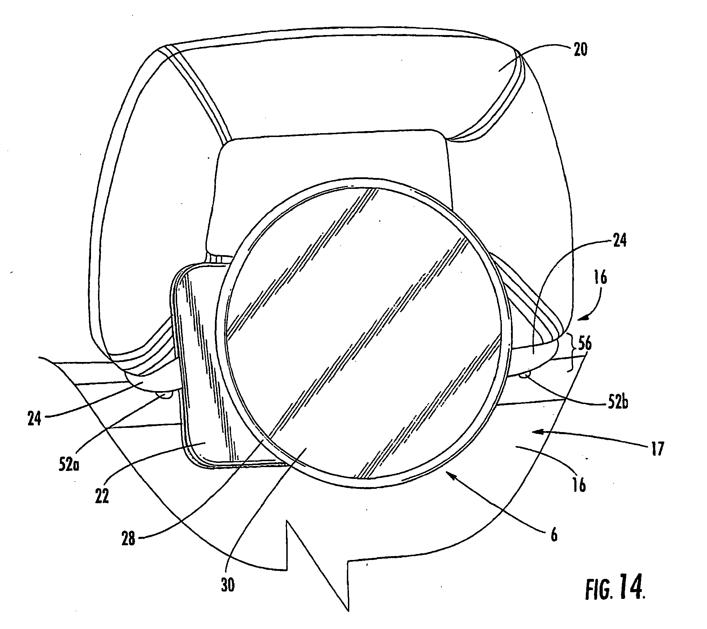

Referring to FIG. 1, the mirror assembly of the invention is generally indicated at 6. The mirror assembly 6 is installed in a motor vehicle 8 so that a driver 10 of the vehicle 8 can view a child 12 sitting in a rear-facing safety seat 14. The driver 10 can observe the child 12 by looking in a rear view mirror 15 which reflects the image shown in the mirror assembly 6. The safety seat 14 is secured to the rear seat 16 of the vehicle 8 using conventional seat or shoulder belts 18. The mirror assembly 6 is shown in Fig. 1 as attached directly to the head rest portion 20 of the rear seat 16 as described in further detail below. Alternatively, and more preferably, the mirror assembly 6 is attached in communication with the head rest 20 and the back seat 16 over gap 56, as shown in detail in Fig. 14.

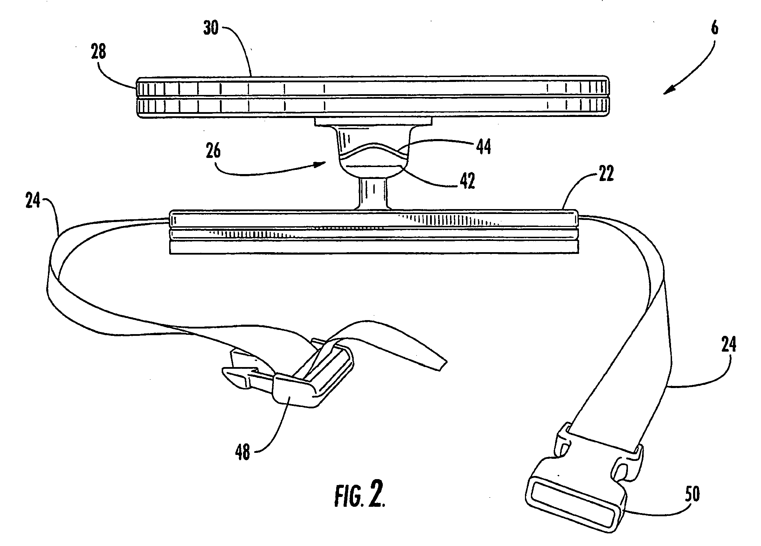

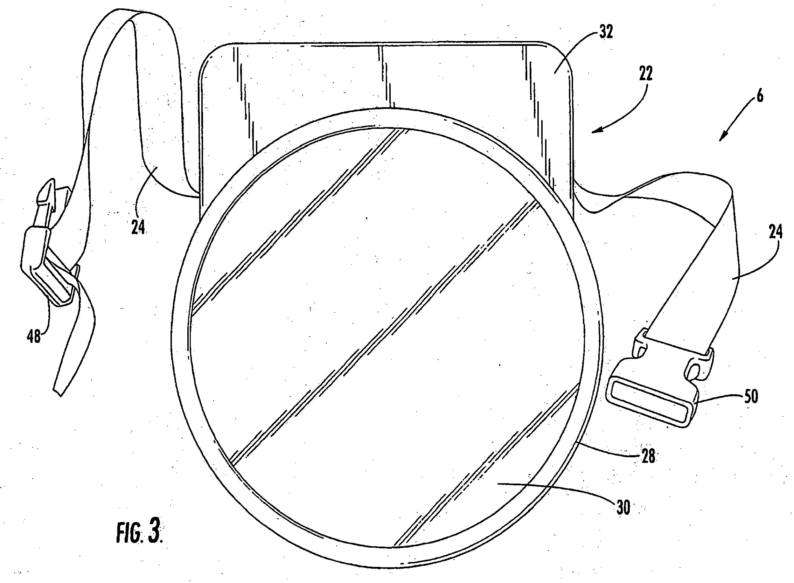

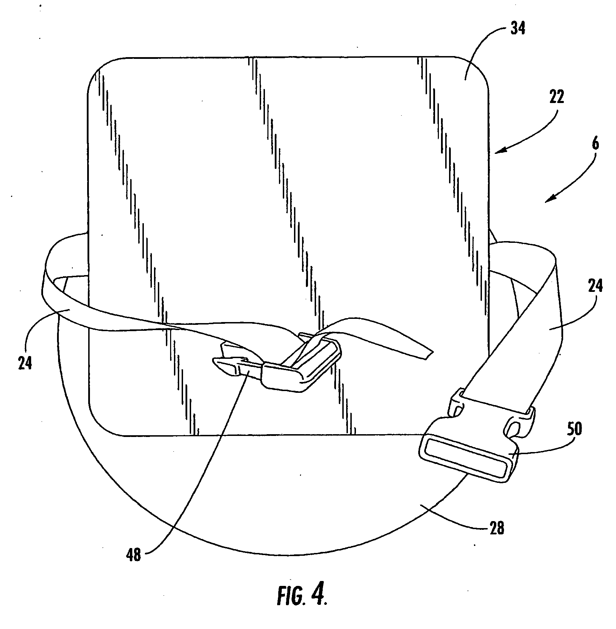

FIG. 2 shows the mirror assembly 6 in more detail. The assembly 6 includes a base plate 22, fastening strap 24, universal ball joint 26, and mirror housing 28 that holds a reflective mirror 30. The mirror housing 28 is connected to the base plate 22 by the universal ball joint 26. The base plate 22 includes at least one fastening strap 24 for attaching the mirror assembly 6 to the head rest portion 20 of the rear seat 16. In FIG. 3, a front view of the mirror assembly 6 is shown, and in FIG. 4, a back view of the mirror assembly 6 is shown.

The base plate 22 supports and stabilizes the mirror housing 28. The base plate 22 can be made from any suitable material such as a high strength, durable plastic, metal, or composite. Since the base plate 22 is placed against the head rest portion 20 of the rear seat, the height of the plate 22 typically is less than the height of the head rest 20, and the width of the plate 22 typically is less than the width of the head rest 20. The base plate 22 can be designed to have any suitable shape. For instance, FIGS. 2-4 show a square-shaped base plate 22, but it is recognized that rectangular, circular, or other shaped base plates also can be used in accordance with this invention.

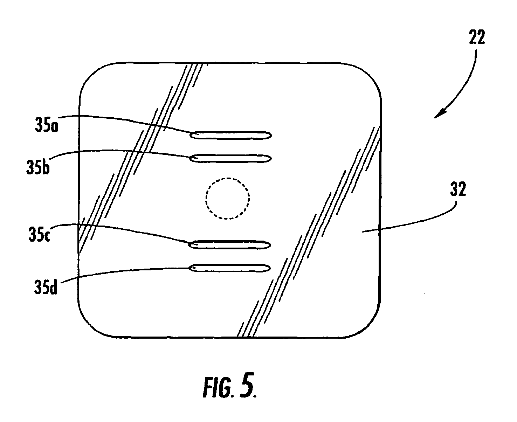

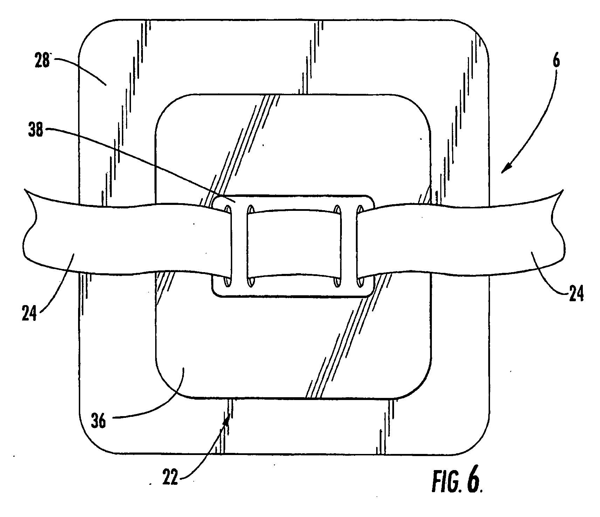

As shown in FIGS. 3 and 4, the base plate 22 has a front surface 32 and a rear surface 34. The front and rear surfaces 32 and 34 can contain slotted portions 35a, 35b, 35c, and 35d, which extend through the base plate 22 as illustrated in FIG. 5. These openings 35a, 35b, 35c, and 35d allow for the feeding of the fastening strap 24 therethrough as described in further detail below. Both, or either, front or rear surfaces may not be perfectly flat planes. Each surface, individually or in parallel, may be curved or may be a composite of multiple flat or curved planes arranged at angles or curves to the others, to form a single geometric shape or a pattern of shapes. Such a curved, angular or convoluted unified base plate or individual base plate surfaces, may allow the base plate to better stabilize itself along or against the varied contour of the headrest and/orseat back. Also, the base plate may not be completely solid within a perimeter defined by its outermost dimensions. To save weight, money or improve performance, material may be removed from certain areas of the base plate, altering its recognizable shape. Thus, its final form may not have the appearance of a solid 'plate'. For example, a square base plate with four triangular shaped areas removed from each side, may resemble an 'X', not a square. In addition, a foam pad 36 can be attached to the back surface 34 of the base plate 22. This foam pad 36 provides a cushion for the base plate 22 when it is pressed against the head rest 20. The foam pad 36 can have a cut-out portion 38 so that the openings 35a, 35b, 35c, and 35d in the base plate 22 are exposed. This cut-out area 38 allows the fastening strap 24 to be fed through the slots 35a, 35b, 35c, and 35d as shown in FIG. 6.

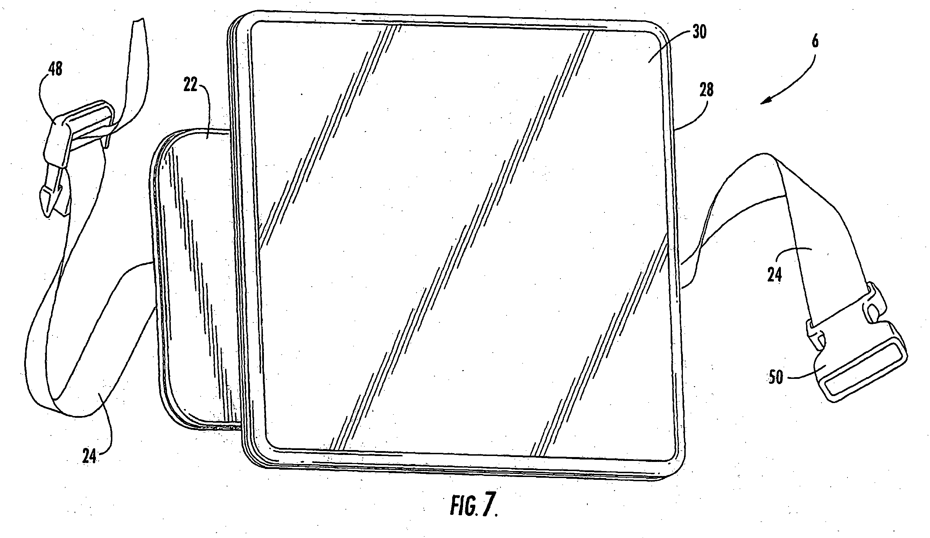

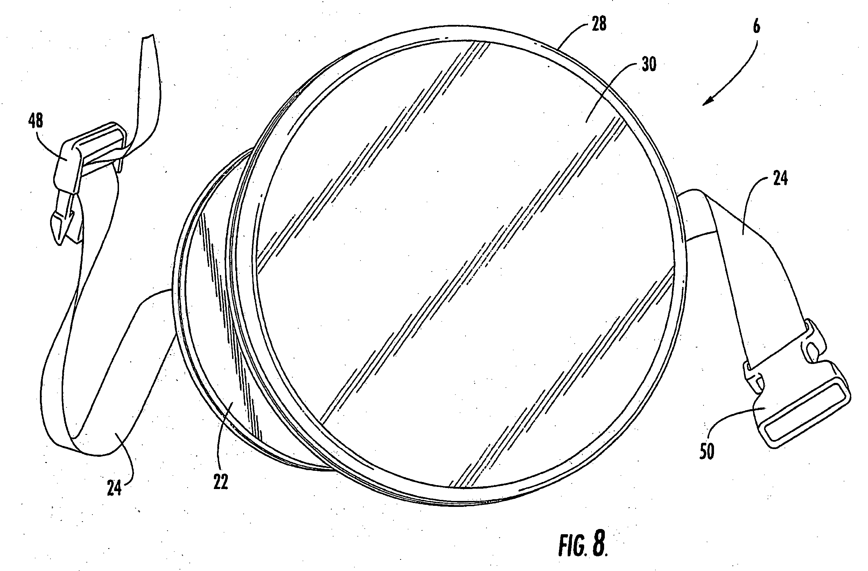

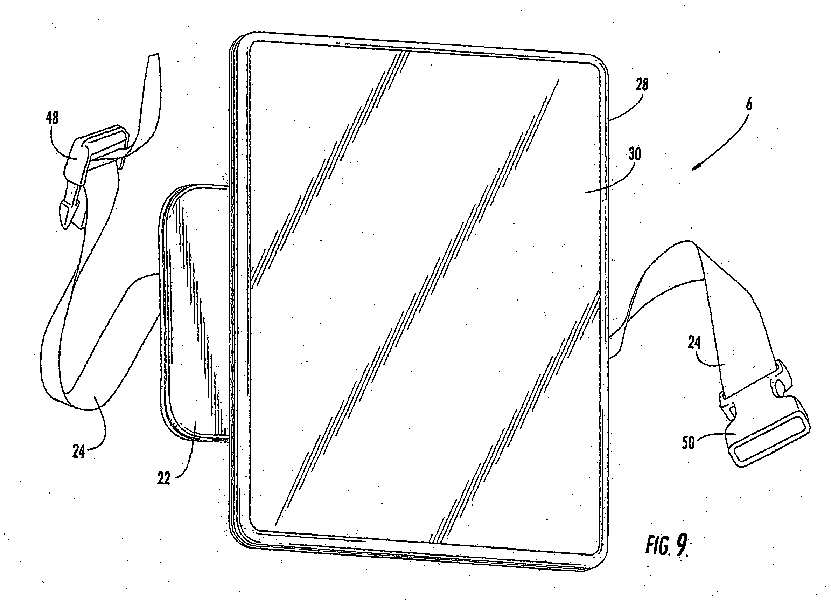

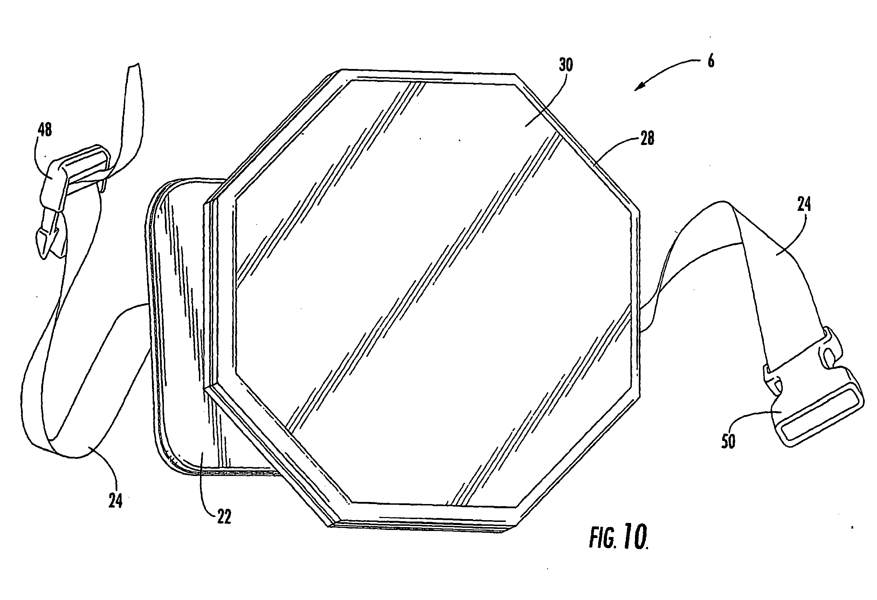

The mirror housing 28, which holds and frames the mirror 30, can be made of a composite, metal, plastic, or other composition having high mechanical strength. The mirror housing 28 and mirror 30 can have the same shape as the base plate 22 as illustrated in the embodiments shown in FIGS. 7 and 8. More specifically, FIG. 7 shows an assembly 6 comprising a square-shaped mirror housing 28 attached to a square-shaped base plate 22. In FIG. 8, a circular-shaped mirror housing 28 is attached to a circular-shaped, base plate 22. It is not necessary, however, that the base plate 22 and mirror housing 28 have identically-shaped structures. For example, in FIGS. 2-4 and 6, the mirror 30 is shown having a circular structure, and the base plate 22 is shown having a square structure. Referring to FIG. 9, the mirror assembly 6 includes a rectangular-shaped mirror housing 28 attached to a square-shaped base plate 22. Finally, in FIG. 10, an octagonal mirror housing 28 is shown attached to a square-shaped base plate 22. It is recognized that the mirror housing 28 and base plate 22 each can have a wide variety of structures, and these structures can be combined many different ways to create aesthetically-pleasing mirror assemblies 6.

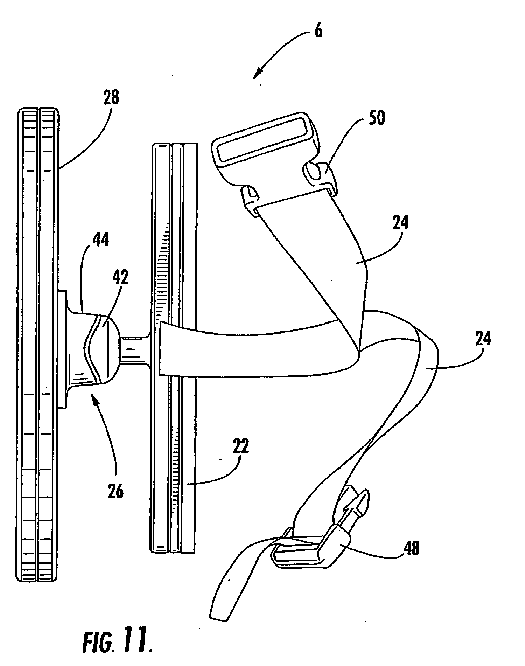

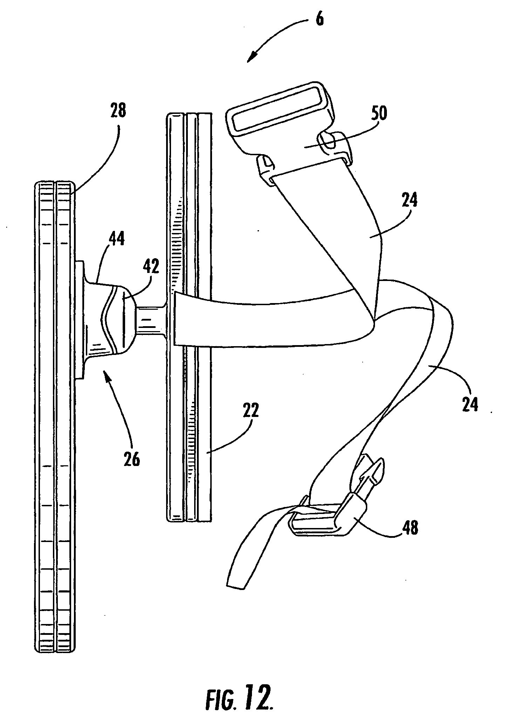

Referring back to FIG. 2, the mirror housing 28 is shown pivotably attached to the base plate 22 by the universal ball joint 26. Conventional ball joints 26 can be used. The typical ball joint 26 includes a recessed or socket portion 44 for receiving a ball 42. The recessed portion 44 has a width slightly larger than the diameter of the ball 42 allowing the ball 42 to rotate freely. The universal ball joint 26 allows the mirror housing 28 to be moved in any direction. The mirror housing 28 can be tilted in a vertical or horizontal direction. Of course, the position of the enclosed mirror 30 changes as the mirror frame 28 is adjusted. The base plate 22, ball joint 26, and mirror housing 28 can be arranged so that the housing 28 is mounted either on-center or off-center on the base plate 22. In FIG. 11, the mirror housing 28 is mounted symmetrically. The upper portion of the mirror housing 28 extends above the base plate 22, and the lower portion of the mirror housing 28 extends, in approximately the same dimensions, below the base plate 22. In FIG. 12, the mirror housing 28 is mounted asymmetrically. The lower portion of the mirror housing 28 extends substantially below the base plate 22. This allows for additional clearance, if needed, to adjust the mirror.

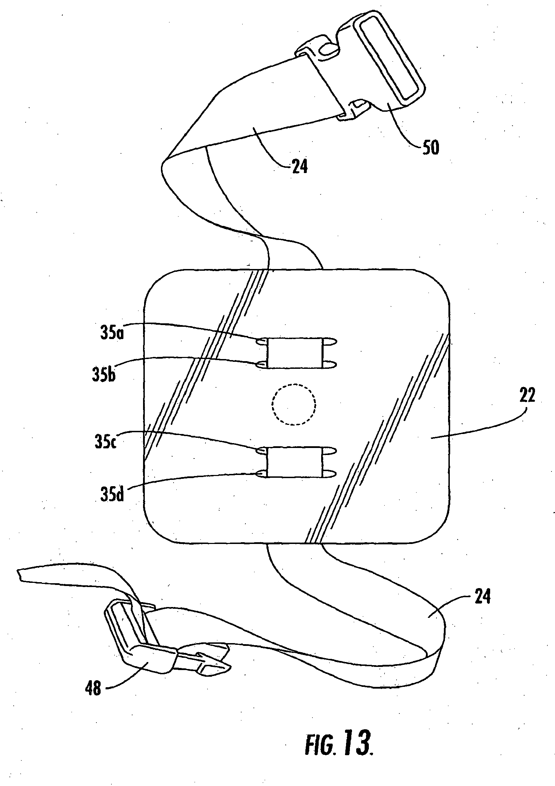

A strap 24 for fastening the mirror assembly 6 to the head rest 20 of the rear seat 16 is attached to the base plate 22. The fastening strap 24 is made from a flexible material such as a nylon or polyester fabric. The fastening strap 24 can be equipped with a male connector 48 on a first end and a female connector 50 on its second, opposing end as shown in FIGS. 2-13. The connectors 48 and 50 can be sewn onto their respective ends of the fastening strap 24. Referring to FIG. 13, the fastening strap 24 can be attached to the base plate 22 by inserting it through the slotted portions 35a, 35b, 35c, and 35d located therein. More particularly, in one embodiment, the strap 24 can be threaded up and through slot 35a, down and through slot 35b, behind the base plate 22, up and through slot 35c, and down and through slot 35d located in the base plate 22. The fastening strap 24 can be attached to the base plate 22 by other means as well. For instance, it is not necessary that a single strap 24, which extends completely across the backside of the plate 22 or through the entire plate 22, be used. Rather, two separate fastening straps 24 can be used. A male strap, which is equipped with a male connector 48, can be attached to one side edge of the plate 22, and a female strap, which is equipped with a female connector 50, can be attached to the opposing side edge of the plate 22. The fastening strap(s) may not be flexible along its/ their entire length(s) and may include component areas or sections that are rigid.

Referring to FIG.14, in order to fasten the mirror assembly 6 to the head rest 20 of the rear seat 16, the base plate 22 is placed against the head rest 20 so that the assembly 6 rests in its desired position to bridge gap 56. The base plate 22 provides a support by which the mirror assembly 6 can be attached to a seat back 16 and head rest 20 of a car seat, generally referenced as 17. It has been found that an optimal position for a mirror is at approximately where headrest 20 meets the back seat 16. However, there is a gap 56, as in Fig. 14, making it very difficult if not impossible to effectively mount a mirror in this area. The present invention uniquely provides a support base 22 that is wide enough to bridge the gap 56 between the head rest 20 and the back seat 16. As a result, the present invention provides an assembly that can securely position a mirror that is in an optimal location at gap 56 between the head rest 20 and back seat 16. Alternatively, the mirror assembly can be attached directly to the head rest 20, in Fig. 1.

Base plate 22 may be equipped with a foam pad 36 that is positioned so that it presses against the head rest 20 and back seat 16. Many head rests 20 are vertically adjustable. The head rest 20 can be mounted on metal support bars 52a and 52b so that it can be raised and lowered to a desired comfortable position. The head rest 20 can be in a fully lowered position so that it abuts the back rest 16 when the mirror assembly 6 is installed. Alternatively, the head rest 20 can be in an elevated position so that there is a gap 56 between the back rest portion 16 and head rest 20 of the seat 17. If the head rest 20 is elevated, the mirror housing 28 is positioned so that it extends across this gap 56. After placing the mirror assembly 6 in its proper position, each end of the strap 24 is looped around the backside of the head rest 20. Thus, the mirror assembly 6 can be mounted directly to the head rest 20 or across gap 56. The use of a wide base plate 22 sufficient to bridge the gap 56 and encircling straps 24 enables the mirror of the present invention to be installed in this desirable fashion.

Then, the opposing ends of the fastening strap 24 are coupled together by connecting the male and female connectors 48 and 50 to each other. The connectors 48 and 50 are inserted and pushed together until they interlock. Click connectors can be used, and a person installing the mirror assembly 6 will know that such connectors 48 and 50 are locked upon hearing a clicking sound. In FIG. 14, the mirror assembly 6 is shown fastened to the head rest 20 of a rear seat 16 in a vehicle. The fastening strap 24 is wrapped around the metal support bars 52a and 52b between the head rest 20 and seat back 16 and the ends of the fastening strap 24 are coupled together by connecting the male and female connectors 48 and 50 behind the head rest 20, namely behind gap 56.

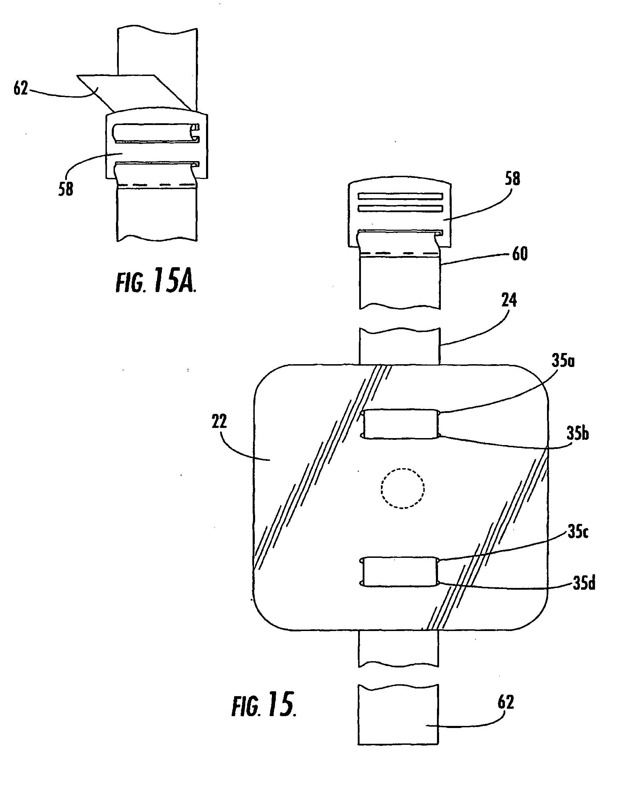

It is recognized that connecting means other than male and female connectors 48 and 50 can be used for coupling the ends of the fastening strap 24 together. For instance, a slotted buckle 58 can be attached to one end 60 of the fastening strap 24, while no connector is attached to the other end 62 of the strap 24 as shown in FIG. 15. The loose end of the strap 24, which does not contain a connector, can be inserted through the buckle 58. The strap 24 is tightened by pulling upon the loose end 62 after it has been inserted through the buckle 58 as shown in FIG. 15A. In another embodiment, a hook and loop fastening system, such as VELCRO, can be used to attach one end 60 of the fastening strap 24 to the other end 62.

A single fastening strap 24 normally is sufficient to secure the mirror assembly 6 to the head rest 20 of the rear seat 16 and keep it in place. But, multiple fastening straps 24 can be used if desired. These additional fastening straps 24 can provide a reinforced fastening of the assembly 6 to the head rest 20.

The fastened mirror assembly 6 of this invention has several advantageous features. First, as described above, the mirror housing 28 is mounted on a universal ball joint 26; thus, it can be adjusted to face many different directions. The mirror housing 28 can be adjusted depending upon the position of the child in the rear seat and the driver or passenger in the front seat. For safety purposes, the mirror housing 28 should be angled so that there is a clear line of vision between the driver or passenger and the child seated in the safety seat. This adjustable mirror feature allows the driver or passenger to view the child clearly. The child, as he or she looks into the adjusted mirror 30, also will be able to view a reflection of himself or herself.

Secondly, the mirror assembly 6 can be installed universally in any type of motor vehicle. For example, the mirror assembly 6 can be installed in sedans, minivans, station wagons, trucks, and sport-utility vehicles. In contrast to conventional mirror systems, the fastening strap 24 in the mirror assembly 6 of this invention does not need to be fed behind the back rest portion of the rear seat or between the back ledge/shelf area of the vehicle.

Thirdly, the mirror assembly 6 of this invention can be installed quickly and easily, because the fastening strap 24 only needs to be wrapped around the head rest portion of the rear seat.

It is appreciated by those skilled in the art that various other changes and modifications can be made to the illustrated embodiments and description herein without departing from the spirit of the present invention. All such modifications and changes are intended to be covered by the appended claims.

## Claims

1. A mirror assembly for viewing a child sitting in a rear-facing child seat (14) positioned on a vehicle seat (17) having a seat back (16) and a head rest (20) with a gap (56) therebetween, comprising
a base plate (22);
a mirror housing (28) adjustably connected to the base plate (22);
a mirror (30) attached to the mirror housing (28),
**characterized in that**
the base plate has a front surface (32) and a rear surface (34), the base plate (22) is wide enough to bridge the gap (56), the mirror assembly (6) further comprises means for mounting the rear surface (34) of the base plate (22) in communication with the head rest (20) and the seat back (16) over the gap (56), the mirror housing being mounted on the base plate (22) and pivotally attached to the base plate by a universal ball joint (26) to allow the mirror to be manually adjusted, and wherein the base plate (22) is removably connected to the head rest (20) or metal support bars (52a, 52b) between the head rest (20) and seat back (16).

2. The mirror assembly of claim 1, wherein the means for mounting the base plate (22) comprises a fastening strap (24) extending from the base plate (22), the fastening strap (24) having a first end and an opposing second end for looping the strap (24) around the head rest (20); and
a connector means (48, 50, 58) for coupling the first and second ends of the strap (24) together.

3. The mirror assembly of claim 1, wherein the mirror housing (28) and mirror (30) are circular-shaped, and the base plate (22) is circular-shaped.

4. The mirror assembly of claim 1, wherein the mirror housing (28) and mirror (30) are square-shaped, and the base plate (22) is square-shaped.

5. The mirror assembly of claim 1, wherein the mirror housing (28) and mirror (30) are octagonal-shaped, and the base plate (22) is square-shaped.

6. The mirror assembly of claim 1, wherein the mirror housing (28) and mirror (30) are rectangular-shaped, and the base plate (22) is square-shaped.

7. The mirror assembly of claim 1, wherein the mirror housing (28) and mirror (30) are circular-shaped, and the base plate (22) is square-shaped.

8. The mirror assembly of claim 1, further comprising a foam pad (36) adhered to the rear surface (34) of the base plate (22).

9. The mirror assembly of claim 1, wherein the base plate (22) comprises multiple slots (35a, 35b, 35c, 35d) for inserting the fastening strap (24) therethrough.

10. The mirror assembly of claim 2, wherein the connector means comprises a slotted buckle (58).

11. The mirror assembly of claim 2, wherein the connector means comprises male and female connectors (48, 50).

12. The mirror assembly of claim 2, wherein the connector means comprises fastening hooks and loops.

13. The mirror assembly of claim 1, wherein multiple fastening straps (24) extend from the base plate (22).

## Patentansprüche

1. Spiegelanordnung zum Beobachten eines Kindes, das in einem nach hinten gewandten Kindersitz (14) sitzt, welcher auf einem Fahrzeugsitz (17) angeordnet ist, der eine Rückenlehne (16) und eine Kopfstütze (20) mit einem Zwischenraum (56) dazwischen aufweist, umfassend:
eine Grundplatte (22);
ein verstellbar mit der Grundplatte (22) verbundenes Spiegelgehäuse (28);
einen an dem Spiegelgehäuse (28) befestigten Spiegel (30),
**dadurch gekennzeichnet, dass**
die Grundplatte eine Vorderseite (32) und eine Rückseite (34) aufweist, die Grundplatte (22) breit genug ist, um den Zwischenraum (56) zu überbrücken, die Spiegelanordnung (6) ferner ein Mittel zum Anbringen der Rückseite (34) der Grundplatte (22) in Kommunikation mit der Kopfstütze (20) und der Rückenlehne (16) über dem Zwischenraum (56) umfasst, wobei das Spiegelgehäuse an der Grundplatte (22) angebracht und über ein universelles Kugelgelenk (26) drehbar an der Grundplatte befestigt ist, sodass der Spiegel manuell verstellt werden kann, und wobei die Grundplatte (22) abnehmbar mit der Kopfstütze (20) oder metallischen Stützstangen (52a, 52b) zwischen der Kopfstütze (20) und der Rückenlehne (16) verbunden ist.

2. Spiegelanordnung nach Anspruch 1, wobei das Mittel zum Anbringen der Grundplatte (22) Folgendes umfasst: einen sich von der Grundplatte (22) erstreckenden Befestigungsriemen (24), wobei der Befestigungsriemen (24) ein erstes Ende und ein gegenüberliegendes zweites Ende zum Schlingen des Riemens (24) um die Kopfstütze (20) aufweist; und
ein Verbindungsmittel (48, 50, 58) zum Verbinden des ersten und zweiten Endes des Riemens (24).

3. Spiegelanordnung nach Anspruch 1, wobei das Spiegelgehäuse (28) und der Spiegel (30) kreisförmig sind und die Grundplatte (22) kreisförmig ist.

4. Spiegelanordnung nach Anspruch 1, wobei das Spiegelgehäuse (28) und der Spiegel (30) quadratisch sind und die Grundplatte (22) quadratisch ist.

5. Spiegelanordnung nach Anspruch 1, wobei das Spiegelgehäuse (28) und der Spiegel (30) achteckig sind und die Grundplatte (22) achteckig ist.

6. Spiegelanordnung nach Anspruch 1, wobei das Spiegelgehäuse (28) und der Spiegel (30) rechteckig sind und die Grundplatte (22) rechteckig ist.

7. Spiegelanordnung nach Anspruch 1, wobei das Spiegelgehäuse (28) und der Spiegel (30) kreisförmig sind und die Grundplatte (22) quadratisch ist.

8. Spiegelanordnung nach Anspruch 1, ferner umfassend ein an der Rückseite (34) der Grundplatte (22) haftendes Schaumstoffpolster (36).

9. Spiegelanordnung nach Anspruch 1, wobei die Grundplatte (22) mehrere Schlitze (35a, 35b, 35c, 35d) zum Hindurchführen des Befestigungsriemens (24) umfasst.

10. Spiegelanordnung nach Anspruch 2, wobei das Verbindungsmittel eine mit Schlitzen versehene Schnalle (58) umfasst.

11. Spiegelanordnung nach Anspruch 2, wobei das Verbindungsmittel Steck- und Aufnahmeverbinder (48, 50) umfasst.

12. Spiegelanordnung nach Anspruch 2, wobei das Verbindungsmittel einen Klettverschluss umfasst.

13. Spiegelanordnung nach Anspruch 1, wobei sich von der Grundplatte (22) mehrere Befestigungsriemen (24) erstrecken.

## Revendications

1. Ensemble rétroviseur permettant de voir un enfant assis dans un siège pour enfant dos à la route (14) placé sur un siège de véhicule (17) comportant un dossier de siège (16) et un appuie-tête (20) entre lesquels se trouve un espace (56) comprenant
une plaque support (22) ;
un boîtier de rétroviseur (28) relié de manière réglable à la plaque support (22) ;
un rétroviseur (30) fixé au boîtier de rétroviseur (28) ;
**caractérisé en ce que**
la plaque de base comporte une face avant (32) et une face arrière (34), la plaque support (22) est suffisamment large pour combler l'espace (56), l'ensemble rétroviseur (6) comprend en outre un moyen destiné à monter la face arrière (34) de la plaque support (22) en communication avec l'appuie-tête (20) et le dossier de siège (16) au-dessus de l'espace (56), le boîtier de rétroviseur étant monté sur la plaque support (22) et fixé de manière pivotante à la plaque support par une articulation sphérique universelle (26) pour permettre l'ajustement manuel du rétroviseur, et ladite plaque support (22) est reliée de manière amovible à l'appuie-tête (20) ou à des barres support métalliques (52a, 52b) entre l'appuie-tête (20) et le dossier de siège (16).

2. Ensemble rétroviseur selon la revendication 1, ledit moyen destiné à monter la plaque support (22) comprenant une sangle de serrage (24) s'étendant depuis la plaque support (22), la sangle de serrage (24) possédant une première extrémité et une seconde extrémité opposée pour mettre la sangle (24) en boucle autour de l'appuie-tête (20) ; et
un moyen de raccordement (48, 50, 58) pour accoupler les première et seconde extrémités de la sangle (24) ensemble.

3. Ensemble rétroviseur selon la revendication 1, ledit boîtier de rétroviseur (28) et ledit rétroviseur (30) étant de forme circulaire et ladite plaque support (22) étant de forme circulaire.

4. Ensemble rétroviseur selon la revendication 1, ledit boîtier de rétroviseur (28) et ledit rétroviseur (30) étant de forme carrée et ladite plaque support (22) étant de forme carrée.

5. Ensemble rétroviseur selon la revendication 1, ledit boîtier de rétroviseur (28) et ledit rétroviseur (30) étant de forme octogonale et ladite plaque support (22) étant de forme carrée.

6. Ensemble rétroviseur selon la revendication 1, ledit boîtier de rétroviseur (28) et ledit rétroviseur (30) étant de forme rectangulaire et ladite plaque support (22) étant de forme carrée.

7. Ensemble rétroviseur selon la revendication 1, ledit boîtier de rétroviseur (28) et ledit rétroviseur (30) étant de forme circulaire et ladite plaque support (22) étant de forme carrée.

8. Ensemble rétroviseur selon la revendication 1, comprenant en outre un tampon de mousse (36) collé sur la face arrière (34) de la plaque support (22).

9. Ensemble rétroviseur selon la revendication 1, ladite plaque support (22) comprenant de multiples fentes (35a, 35b, 35c, 35d) pour insérer la sangle de serrage (24) à travers celles-ci.

10. Ensemble rétroviseur selon la revendication 2, ledit moyen de raccordement comprenant une boucle à fentes (58).

11. Ensemble rétroviseur selon la revendication 2, ledit moyen de raccordement comprenant des raccords mâles et femelles (48, 50).

12. Ensemble rétroviseur selon la revendication 2, ledit moyen de raccordement comprenant des crochets et des bouclettes de fixation.

13. Ensemble rétroviseur selon la revendication 1, lesdites multiples sangles de serrage (24) d'étendant depuis la plaque support (22).
